Europäisches Patentamt

European Patent Office

Office européen des brevets

(11) Veröffentlichungsnummer: **0 387 185**
**A2**

## (12) EUROPÄISCHE PATENTANMELDUNG

(21) Anmeldenummer: 90730002.4

(22) Anmeldetag: 03.03.90

(51) Int. Cl.⁵: **G05D 27/02**

Die Bezeichnung der Erfindung wurde geändert (Richtlinien für die Prüfung im EPA, A-III, 7.3).

(30) Priorität: 04.03.89 DE 3906969

(43) Veröffentlichungstag der Anmeldung:
**12.09.90 Patentblatt 90/37**

(84) Benannte Vertragsstaaten:
**AT BE CH DE DK ES FR GB GR IT LI LU NL SE**

(71) Anmelder: **HOESCH Metall + Kunststoffwerk GmbH & Co.**

**D-5166 Kreuzau-Schneidhausen(DE)**

(72) Erfinder: **Brandes, Helmut, Dipl.-Kfm.**
**P.-Roettges-Weg 32**
**D-5166 Kreuzau-Üdingen(DE)**

(74) Vertreter: **Langmaack, Jürgen, Dipl.-Ing. et al**
**Patentanwälte Maxton . Maxton . Langmaack**
**Goltsteinstrasse 93 Postfach 51 08 06**
**D-5000 Köln 51(DE)**

(54) **Verfahren zur Regelung der Raumatmosphäre einer Dampfbadekabine.**

(57) Bei Dampfbadekabinen erfolgt die Wärmezufuhr zumindest zum Teil durch die Einleitung von Wasserdampf, wobei die einzuleitende Wasserdampfmenge in Abhängigkeit von der Innenraumtamperatur geregelt wird, um eine Überhitzung zu vermeiden. Da bei modernen, gut isolierten Dampfbadekabinen die Soll-Temperatur über einen längeren Zeitraum eingehalten wird, erfolgt eine Dampfzufuhr in relativ langen Zeitintervallen, so daß zunächst der "sichtbare" Dampf berschwindet und dann durch Kondensation auch der Wasserdampfgehalt der Luft absinkt. Durch die Einleitung eines strömungsfähigen Kühlmittels, vorzugsweise in Abhängigkeit von der Nebeldichte im Innenraum, läßt sich eine Temperaturgleichgewichtslage unter gleichzeitiger Erhaltung einer sichtbaren Dampfatmosphäre erreichen.

Fig.1

## Verfahren zur Regelung der Raumatmosphäre einer Dampfbadekabine und Durchführung zur Regelung des Verfahrens

Die Erfindung betrifft ein Verfahren zur Regelung der Raumatmosphäre im Innenraum einer Dampfbadekabine, wobei die Wärmezufuhr zumindest zum Teil durch die Einleitung von Wasserdampf erfolgt und in Abhängigkeit von einer vorgebbaren Innenraumtemperatur geregelt wird.

Die Raumatmosphäre im Innenraum von Dampfbädern ist definiert einmal durch die Lufttemperatur, die zwischen 40 und 50°C liegen soll, und zum anderen durch den Dampfsättigungszustand der Luft bei dieser Temperatur. Hierbei muß ein Sättigungszustand erreicht werden, bei dem ein sichtbarer "Dampf" im Innenraum, also ein Nebel, vorhanden ist. Die Aufheizung des Innenraums erfolgt bei Dampfbädern durch die Zufuhr von Wasserdampf, wobei die Dampfmenge in Abhängigkeit von einer vorgegebenen Innenraumtemperatur geregelt wird. Bei klassischen Dampfbaderäumen mit gemauerten und gekachelten Wänden stellt sich nach einiger Betriebszeit für die Lufttemperatur im Innenraum ein Gleichgewichtszustand ein, der dadurch bewirkt wird, daß über die Wände ständig Wärme abfließt und so auch kontinuierlich Wärme über den Wasserdampf zugeführt werden muß, wobei hier der Wasserdampf dann bereits in Nebelform in den Raum eintritt. Durch die Wärmeabgabe über die Wände werden andererseits erhebliche Wassermengen kondensiert, die dann an den Wänden ablaufen. Der Energieaufwand für ein derartiges System ist erheblich.

Moderne Dampfbadekabinen, wie sie insbesondere im privaten Bereich Anwendung finden, sind als gesonderte Kabinen im Innenraum eines Gebäudes aufgestellt und bestehen in der Regel aus tiefgezogenen Kunststoffteilen, die zumeist auf ihrer Rückseite mit einer verstärkenden Beschichtung versehen sind, so daß vom Material und vom Aufbau her die Wände einer derartigen Dampfkabine verhältnismäßig gut wärmeisoliert sind. Dies hat jedoch zur Folge, daß nach Erreichen der vorgegebenen Lufttemperatur von 40 bis 50°C die zur Beheizung dienende Dampfzufuhr abgeschaltet wird und solange abgeschaltet bleibt, bis über die vorbeschriebene Wärmeabgabe über die Wandung oder durch Undichtigkeiten in der Tür die Ist-Temperatur im Innenraum absinkt und erneut Wasserdampf zur Aufheizung eingeleitet wird. Durch die Kondensation des Wasserdampfes an der Kabinenwandung verschwindet jedoch innerhalb verhältnismäßig kurzer Zeit nach dem Abschalten der Wasserdampfzufuhr der gewünschte Nebel, so daß zwar die Raumatmosphäre eine hohe Luftfeuchtigkeit aufweist, jedoch eben der sichtbare "Dampf" fehlt. Eine weitere Dampfzufuhr würde zu einer unzulässigen Erhöhung der Lufttemperatur führen. Eine Wärmeabfuhr über eine Kühlung der Kabinenwände ist deshalb nicht möglich, weil zumindest die Wandungsbauteile so ausgebildet sind, daß sie zugleich die Sitzbänke und Rückenlehne in der Kabine bilden. Darüber hinaus würde sich hier eine erhebliche Erhöhung des Wärmeverbrauchs ergeben. Schon aus wirtschaftlichen Gründen ist es daher wünschenswert, die Kabinenwände insbesondere bei Kabinen mit größeren Abmessungen mit möglichst guter Wärmeisolierung auszuführen.

Der Erfindung liegt nun die Aufgabe zugrunde, ein Verfahren der eingangs bezeichneten Art zu schaffen, das bei möglichst geringem Aufwand an Wärmeenergie die Bildung eines Nebels im Innenraum der Dampfbadekabine ermöglicht.

Diese Aufgabe wird erfindungsgemäß dadurch gelöst, daß zur Ausbildung eines Nebels im Innenraum bei vorgegebener Innenraumtemperatur ein strömungsfähiges Kühlmittel in den Innenraum eingeführt wird. Dieses Verfahren bietet den Vorteil, daß die Kühlung der mit Wasserdampf beladenen Luft im Innenraum der Dampfbadekabine nicht mehr über die Wände erfolgt, wobei dann der Wasserdampf an den Kabinenwänden kondensiert und zum Boden abläuft, sondern durch eine unmittelbare Kühlung der Luft die Sättigungsgrenze unterschritten wird und somit im Innenraum eine Nebelbildung eintritt. Verwendet man nunmehr gut wärmeisolierte Kabinenwände, so wird die Wasserkondensation an den Kabinenwänden weitgehend unterbunden, so daß schon geringe Kühlmittelmengen, die in die Kabinenluft eingeführt werden, zur Nebelbildung führen. Da entsprechend der Zufuhr an Kühlmittel die Innenraumtemperatur absinkt, wird dann jeweils beim Absinken auf die Soll-Temperatur der Dampfgenerator eingeschaltet und erneut heißer Wasserdampf in die Dampfkabine eingeleitet. Durch diese Weise läßt sich gezielt ein Gleichgewichtszustand in der Weise einregulieren, daß der Innenraum der Kabine immer mit Nebel durchsetzt ist. Bei entsprechender Vorgabe des Verhältnisses des Dampfmengenstromes zum Luftmengenstrom ist es möglich, mit einer derartigen Vorrichtung die Dampfkabine so zu betreiben, daß praktisch eine kontinuierliche Dampfzufuhr erfolgt, so daß auch dann immer eine sichtbare Dampfatmosphäre in der Kabine vorhanden ist, wenn die Anordnung nur mit einer Temperaturregelung versehen ist.

In einer besonders vorteilhaften Ausgestaltung der Erfindung ist vorgesehen, daß die Regelung der Zufuhr des Kühlmittels in Abhängigkeit von der Nebeldichte erfolgt. Diese Ausgestaltung des Verfahrens hat den Vorteil, daß die Temperaturregelung einerseits und die Nebelbildung andererseits insoweit entkoppelt sind, daß die Kühlmittelzufuhr jeweils nur dann eingeschaltet wird, wenn die Nebeldichte im Innenraum unter ein vorgegebenes Maß absinkt. Damit ist gewährleistet, daß bei eingeschalteter Dampfzufuhr und ohnehin ausreichender Nebeldichte in der Kabine, nicht zusätzlich noch Kühlmittel in den Kabinenraum eingeführt wird.

Die Nebeldichte, d.h. die Trübung der Raumluft durch die in ihr aerosolartig vorhandenen Wassertröpfchen, kann nun einmal durch die Wassermenge je cbm beschrieben werden. Dies ist meßtechnisch für eine Regelung jedoch schwierig darzustellen, so daß in weiterer Ausgestaltung des erfindungsgemäßen Verfahrens vorgeschlagen wird, die Regelung der Zufuhr des Kühlmittels in Abhängigkeit von einer vorgegebenen Lichtdurchlässigkeit der Raumatmosphäre zwischen zwei Meßpunkten vorzunehmen. Dies kann beispielsweise in der Weise geschehen, daß einer Lichtquelle mit vorgegebener Beleuchtungsstärke eine Fotodiode in einem vorgegebenen Abstand zugeordnet wird, über die dann mit Hilfe einer entsprechenden Meßschaltung in Abhängigkeit von der festgestellten Lichtintensität die Kühlmittelzufuhr geregelt wird.

In einer Ausgestaltung des Verfahrens ist vorgesehen, daß als Kühlmittel kalte Luft in den Innenraum eingeleitet wird. Die Kaltluft muß mit möglichst geringer Strömungsgeschwindigkeit und kann zweckmäßigerweise zentral von oben über einen großen Flächenbereich verteilt und eingeleitet werden, so daß keinerlei Zugerscheinungen im Kabineninnenraum auftreten können. Der Vorteil einer Einleitung im oberen Bereich besteht darin, daß gerade der Bereich mit der höchsten Temperatur und dementsprechend mit dem höchsten Wasserdampfgehalt unter seine Sättigungsgrenze abgekühlt wird und kleinste Wassertröpfen ausscheiden, sich also Nebel bildet.

In anderer Ausgestaltung der Erfindung ist hierbei vorgesehen, daß die kalte Luft mit wenigstens einem Teilstrom des zur Beheizung eingeführten Wasserdampfs in den Innenraum eingeleitet wird. Dieses Verfahren hat den Vorteil, daß der in die Kabine eintretende Wasserdampf bei seinem Eintritt schon auf die Sättigungsgrenze abgekühlt ist und damit der Wasserdampf bereits in Nebelform in die Kabine eintritt und so für eine ausreichende Nebeldichte sorgt, andererseits durch die Vermischung mit der Kaltluft die Heizwirkung eingeschränkt ist, so daß in Verbindung mit dem unvermeidlichen Abstrahlungsverlust über die Kabinenwände eine höhere Einschalthäufigkeit des Dampfgenerators erreicht wird. Während bei der Einleitung von Wasserdampf die Luftmenge im Innenraum der Kabine praktisch unverändert bleibt, verlangt die Einleitung von Luft als Kühlmittel notwendigerweise eine Entlüftung des Kabineninnenraums, über die dann allerdings entsprechend der eingeleiteten Luftmenge bei der gegebenen Temperaturlage auch entsprechende Wärmemengen nach außen als Verlustwärme abfließen. In einer anderen Ausgestaltung der Erfindung ist daher vorgesehen, daß als Kühlmittel Kaltwasser in Aerosolform in den Innenraum eingeführt wird. Bei einer Vernebelung von Wasser im Innenraum erfolgt in gleicher Weise wie bei der Einleitung von Kaltluft eine Abkühlung der mit Wasserdampf gesättigten Luft unter die Sättigungsgrenze, so daß, wie vorbeschrieben, Wasser in Tröpfchenform ausfällt, also zusätzlich das als Aerosol eingetragene Kaltwasser zur Bildung eines Nebels beiträgt. Da andererseits die eingebrachten Kaltwassertröpfchen so klein sind und eine hohe spezifische Oberfläche aufweisen, erfolgt eine schnelle Erwärmung, so daß diese Tröpfchen in kürzester Zeit auf die Innenraumtemperatur aufgewärmt sind und dementsprechend vom Benutzer nicht als "kalt" empfunden werden. Der Vorteil dieses Verfahrens besteht insbesondere darin, daß die Wasserzufuhr zum Zwecke der Beheizung einerseits über den Wasserdampf und zur Unterstützung der Nebelbildung andererseits voneinander abgekoppelt sind, wobei die Abkühlung wiederum durch Wasser erfolgt und damit schon mit geringen Wassermengen auch im Bereich der Soll-Temperaturgrenze die Sättigungsgrenze überschritten wird und so praktisch eine konstante Nebeldichte während der Betriebsdauer eingehalten werden kann. Darüber hinaus läßt sich Wasser in Aerosolform über einen großen Querschnittsbereich gut verteilt in den Innenraum einbringen, so daß auch eine gleichmäßige Nebeldichte gegeben ist. Bei gut isolierten Kabinenwänden ist ein energiesparender Betrieb möglich. Eine Belüftung der Kabine ist nur in dem Maße und entsprechend der maximal zulässigen Personenzahl notwendig, um den erforderlichen Luftaustausch zu gewährleisten.

In weiterer Ausgestaltung des erfindungsgemäßen Verfahrens ist vorgesehen, daß das Kühlmittel, vorzugsweise Luft, in Abhängigkeit von der Strömungsgeschwindigkeit zumindest eines Teilstromes des zur Beheizung einzuführenden Wasserdampfes mit diesem zusammen in den Innenraum eingeleitet wird. Diese Anordnung hat den Vorteil, daß das Kühlmittel immer proportional zum Volumenstrom des Dampfes in die Dampfbadekabine eintritt, wobei zweckmäßigerweise das Verhältnis von Dampfmenge und Luftmenge durch Veränderung der Luftzufuhr einstellbar ist. Hierdurch ist in jedem Fall gewährleistet, daß einerseits die gewünschte Innenraumtemperatur aufrechterhalten wird, andererseits der Dampf jedoch deutlich als "Nebel" in den Innenraum der Dampfbadekabine eintritt und so eine deutlich sichtbare Dampfatmosphäre aufrechterhalten werden kann.

Die Erfindung betrifft ferner eine Vorrichtung zur Einleitung von Dampf in eine Dampfbadekabine, insbesondere zur Durchführung des erfindungsgemäßen Verfahrens, mit einem Wasserdampferzeuger, der über wenigstens eine Dampfeinleitungsöffnung mit dem Innenraum der Dampfbadekabine in Verbindung steht.

Um die zur Erzeugung der sichtbaren Dampfatmosphäre notwendigen geringen Kühlmittelmengen, insbesondere Kaltluftmengen, so einführen zu können, daß eine einwandfreie Temperaturführung möglich ist, wird erfindungsgemäß vorgeschlagen, daß wenigstens eine Dampfeinleitungsöffnung rohrförmig ausgebildet ist und daß die Kaltluftzuleitung im wesentlichen koaxial in die Dampfeinleitungsöffnung mündet. Diese Anordnung hat den Vorteil, daß der an der Mündung der Kaltluftzuleitung koaxial entlang fließende Dampfstrom aus der Kaltluftzuleirung kalte Luft ansaugt. Der Wasserdampf umhüllt hierbei den aus der Mündung der Kaltluftzuleitung austretenden Kaltluftstrahl und wird hierbei in diesen eingemischt. Hierdurch wird bereits im Bereich der Dampfeinleitungsöffnung eine örtlich begrenzte Übersättigung erzielt, so daß aus der Dampfeinleitungsöffnung der Dampf in Form einer sichtbaren Dampfwolke in den Innenraum einströmt Die Abkühlung des Wasserdampfes durch die Zumischung von nur geringen Kaltluftmengen ist jedoch so gering, daß die gewünschte Kabineninnentemperatur über die Temperaturregeleinrichtung aufrechterhalten werden kann. Hierbei ist zu berücksichtigen, daß der Wasserdampferzeuger mit nur geringem Überdruck von 0,1 bis 0,2 Bar arbeitet, so daß eine Dampfströmung vom Dampferzeuger in den Innenraum der Dampfbadekabine gewährleistet ist, aber der Dampf mit verhältnismäßig geringer Strömungsgeschwindigkeit in die Dampfbadekabine eintritt. Da die Vorrichtung unmittelbar im Wandbereich der Dampfbadekabine angeordnet werden kann, besteht die Kaltluftzuleitung aus einem kurzen Rohrstutzen, der mit seinem der Dampfeinleitungsöffnung abgekehrten Ende unmittelbar mit der umgebenden Raumluft in Verbindung steht.

In zweckmäßiger Ausgestaltung der Erfindung ist ferner vorgesehen, daß die rohrförmige Dampfeinleitungsöffnung als sich erweiterndes Düsenrohr ausgebildet ist. Diese Anordnung hat den Vorteil, daß die einmündende Kaltluftzuleitung eine Engstelle bildet, so daß hier der Dampf gegenüber den übrigen Rohrquerschnitten mit erhöhter Geschwindigkeit strömt und anschließend dann in der Erweiterung die Strömungsgeschwindigkeit wieder herabgesetzt wird, so daß ein "sanft" strömender Dampfschwaden in den Innenraum der Dampfbadekabine eintritt.

In zweckmäßiger Ausgestaltung der Erfindung ist ferner vorgesehen, daß das Düsenrohr und/oder die Mündung der Kaltluftzuleitung in axialer Richtung gegeneinander verstellbar ausgebildet sind. Durch diese Verstellmöglichkeit, die zweckmäßigerweise von innen über das Düsenrohr erfolgt, das beispielsweise schraubbar in einem entsprechenden Gehäuse gehalten ist, kann das Mengenverhältnis zwischen Dampf und Kaltluft eingeregelt werden. Durch die axiale Verstellung ist es beispielsweise möglich, bei in etwa gleichen Dampfmengenstrom dessen Geschwindigkeit im Bereich der Mündung der Kaltluftzuleitung zu variieren und hier lediglich über eine Veränderung der örtlichen Strömungsgeschwindigkeit den Mengenstrom der anzusaugenden Kaltluft einzuregulieren.

In zweckmäßiger weiterer Ausgestaltung der Erfindung ist vorgesehen, daß dem Düsenrohr eine Dampfverteilkammer vorgeschaltet ist und daß die Dampfverteilkammer mit einem Kondensatablauf versehen ist. Dieser Kondensatablauf kann über eine gesonderte Ableitung nach außen ausmünden. Zweckmäßig ist jedoch die Ausmündung des Kondensatablaufes in den Innenraum, da hier ohnehin wegen des sich an den Kabinenwänden sammelnden und nach unten ablaufenden Kondensates im Bodenbereich eine Entwässerungsmöglichkeit vorgesehen werden muß.

In weiterer Ausgestaltung der Erfindung ist vorgesehen, daß im Bereich des Düsenrohres, vorzugsweise im Bereich der Dampfverteilkammer, eine Einleitungsöffnung für Zusatzstoffe, insbesondere Duftstoffe, angeordnet ist. Diese Anordnung hat den Vorteil, daß beispielsweise ätherische Öle noch vor dem Eintritt in den Dampf eingeleitet werden können, sich mit diesem mischen und dann bei der Nebelbildung an die aerosolartigen Tröpfchen anlagern und so in den Innenraum eingetragen werden.

In einer anderen Ausgestaltung der Erfindung ist vorgesehen, daß die Kaltluftzuleitung mit einem Sperrschieber mit Stellantrieb in Verbindung steht und daß der Stellantrieb mit einer Meßeinrichtung zur Erfassung der Nebeldichte ansteuerbar in Verbindung steht. Mit Hilfe dieser Anordnung ist es möglich, die Kaltluftzufuhr zusätzlich und individuell zu regeln, was insbesondere für den Aufheizvorgang von Vorteil ist. Die Schaltung ist hierbei so vorgesehen, daß der die Nebeldichte erfassende Regelkreis erst dann freigegeben wird, wenn die erforderliche Solltemperatur erreicht oder nahezu erreicht worden ist und daß erst dann in den Dampfstrom, beispielsweise zum Schluß der Aufheizphase bereits Kaltluft zugemischt werden kann. Vorteilhaft ist es, wenn die Zumischung der Kaltluft freigegeben wird etwas unterhalb der vorgegebenen Solltemperatur, so daß zum Schluß der Aufheizphase eine intensive Naßdampfzufuhr in die Kabine erfolgt. In Abwandlung der Erfindung ist es hierbei auch möglich, auf das Meßgerät zur Erfassung der Nebeldichte zu verzichten und hierbei den Stellantrieb des Sperrschiebers mit der Temperaturregelung in der Weise zu koppeln, daß der Sperrschieber bei einer Tempertur, die mit Abstand unterhalb der Solltemperatur liegt, geschlossen ist. Auch hierdurch ist es möglich, in einer schnellen Anheizphase Dampf ohne Zumischung von Kaltluft in den Innenraum einzuführen und dann zum Schluß der Anheizphase mit zugemischter Kaltluft sichtbaren Sattdampf einzuführen, wobei während der gesamten Benutzungszeit im Bereich der üblichen Regelschwankungen um die Solltemperatur die Dampfzufuhr immer vermischt mit Kaltluft erfolgt. Dies ist insbesondere dann vorteilhaft, wenn das Verhältnis zwischen Dampfmengenstrom und Luftmengenstrom über eine Verstellung des Düsenrohres optimal eingestellt werden kann.

Die Erfindung wird anhand schematischer Zeichnungen in Form von Blockschaltbildern näher erläutert. Es zeigen:

Fig. 1 eine Ausführungsform für die Verwendung von Kaltluft als Kühlmittel,

Fig. 2 eine Ausführungsform für die Verwendung von Kaltwassernebel als Kühlmittel,

Fig. 3 eine Ausführungsform mit Zumischung von Kaltluft zum Dampf,

Fig. 4 in größerem Maßstab die Anordnung zur Kaltluftzumischung.

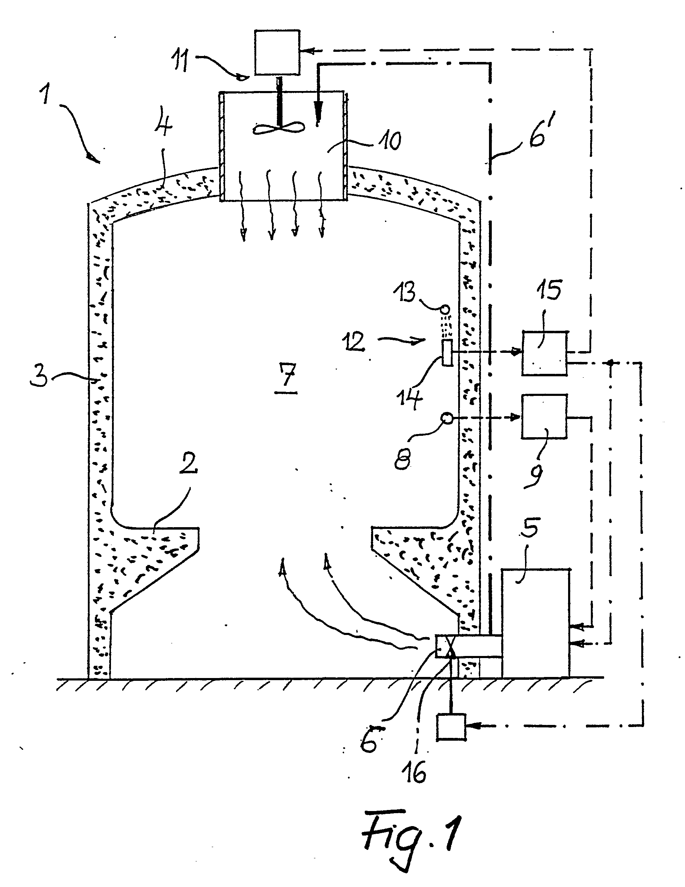

In Fig. 1 ist schematisch eine Dampfbadekabine 1 im Schnitt dargestellt, an deren Innenwand umlaufend eine Sitzbank bzw. Einzelsitze 2 angeordnet sind, wobei beispielsweise die Innenwandflächen mit den Sitzen 2 integrale Bauteile aus einem tiefgezogenen Kunststoff sein können. Die Dampfbadekabine weist eine eigene mit den Seitenwänden 3 verbundene Decke 4 auf, wobei die Seitenwände 3 und die Decke 4 entsprechend wärmeisoliert sind.

Der Dampfbadekabine 1 ist ein beispielsweise elektrisch beheizter Dampfgenerator 5 zugeordnet, durch den über eine Zuleitung 6 drucklos Naßdampf im Bodenbereich in den Kabineninnenraum 7 zur Beheizung und zur Erzeugung der gewünschten Dampfatmosphäre eingeleitet wird. Im Kabineninnenraum ist ein Temperaturfühler 8 angeordnet, mit dessen Hilfe über eine entsprechende Regelschaltung 9 die Temperatur im Innenraum in einer vorgegebenen Höhe, beispielsweise zwischen 40 und 50 °C gehalten wird. Nach dem Aufheizen des Innenraumes 7 wird dann die Temperatur mit Hilfe der Temperaturregelschaltung 9 jeweils in der Weise aufrechterhalten, daß beim Absinken unter die vorgegebene Soll-Temperatur von beispielsweise 40° solange Dampf über den Dampfgenerator 5 in den Innenraum 7 eingeleitet wird, bis sich die Soll-Temperatur wieder eingestellt hat. Bei der gegebenen Temperaturlage im Innenraum der Kabine ergibt sich eine übersättigte Wasserdampfatmosphäre, so daß der Dampf schon in Nebelform in den Kabineninnenraum ausströmt und sich die gewünschte sichtbare "Dampfatmosphäre" ergibt.

Nach dem Abschalten der Dampfzufuhr hält sich die sichtbare Dampfatmosphäre über einige Zeit. Da jedoch eine Kondensation des Wasserdampfs an den Kabinenwandungen selbst bei gut wärmeisolierten Kabinenwandungen sich nicht vermeiden läßt, wird der Kabinenatmosphäre nach einer gewissen Zeit eine entsprechende Wassermenge "entzogen", so daß sich eine mit Wasserdampf höchstens gesättigte Atmosphäre ergibt und damit die sichtbaren aerosolartig in der Atmosphäre vorhandenen Wassertröpfchen wieder verschwinden, ohne daß jedoch die Kabinentemperatur zunächst unter die Soll-Temperatur absinkt.

Um hier nun eine sichtbare Dampfatmosphäre aufrechterhalten zu können, ist bei diesem Ausführungsbeispiel im Deckenbereich der Kabine ein Einlaß 10 für ein strömungsfähiges Kühlmittel in Form von kalter Luft vorgesehen. Der Einlaß 10 und die Luftzufuhr, beispielsweise ein Ventilator 11 mit ganz geringer Förderleistung, ist hierbei so geschaltet, daß die Kaltluft nicht in den Kabineninnnraum eingeblasen wird, sondern "einsickert". Dies kann beispielsweise über einen langsam laufenden Ventilator erfolgen, dem ggf. noch austrittsseitig eine im freien Querschnitt durch die Regelung verstellbare Blende zugeordnet ist. Die damit verbundene Absenkung der Lufttemperatur im oberen Bereich führt sehr schnell dazu, daß die Luft mit Wasser übersättigt ist und der Wasserdampf in sichtbarer Form ausfällt. Die Einleitung der Kaltluft sollte zweckmäßigerweise so erfolgen, daß die kalte Luft vorzugsweise in den zentralen Bereich des Innenraums einsickert, so daß eine Kühlung im Wandbereich vermieden wird.

Da die Einleitung der Kaltluft erst dann erforderlich wird, wenn die sichtbare Dampfatmosphäre, d.h. also der Nebel nahezu vollständig durch Veränderung des Sättigungszustandes verschwunden ist, ist im Kabineninnenraum eine Meßanordnung 12 zur Messung der "Nebeldichte" vorgesehen. Die Meßanordnung 12 kann beispielsweise eine Lichtquelle 13 und eine im vorge gebenen Abstand hierzu angeordnete Fotodiode 14 aufweisen, die mit einer Schaltungsanordnung 15 verbunden ist. Die Schaltungsanordnung 15 ist hierbei so ausgestaltet, daß ein Meßsignal "Ventilator ein" ausgelöst wird, wenn die von der Fotodiode empfangene Lichtstärke ein vorgegebenes Maß überschreitet und ein Steuersignal "Ventilator aus" erfolgt, wenn das vorgegebene Maß entsprechend unterschritten wird.

Die über den Temperaturfühler 8 mit seiner zugehörigen Schaltung erfolgende Temperaturregelung ist der über die Nebelmeßeinrichtung 12 erfolgende Kühlmittelzufuhr entgegengerichtet, so daß die Kaltluftzufuhr in jedem Falle bereits während der Aufheizphase dann abgeschaltet wird, wenn die gewünschte Nebeldichte erreicht ist, gleichwohl wird dann noch solange über den Dampfgenerator Dampf eingeführt, bis die vorgegebene Soll-Temperatur erreicht ist.

Um eine zu schnelle Abkühlung des Kabineninnenraums durch eine wenn auch geringe Kaltluftzufuhr zu vermeiden, ist es ferner möglich, wie durch die strichpunktierte Linie 6' angedeutet, über einen Sperrschieber 16 die normale Dampfzufuhr abzusperren und wenigstens eine Teilmenge an Wasserdampf über den Kühlmitteleinlaß 10 zusammen mit der Kaltluft in den Kabineninnenraum einzuführen, so daß der Wasserdampf "vorgekühlt" in den Kabineninnenraum eintritt und somit einmal von der Dampfmenge und zum anderen von der Temperaturlage her eine nur geringfügige Temperaturerhöhung bewirken kann. Zugleich wird jedoch zum Ausgleich des der Atmosphäre über die Kondensation an den Wänden entzogenen Wassermenge wiederum zusätzlich Wasser in Nebelform in den Kabineninnenraum eingeleitet.

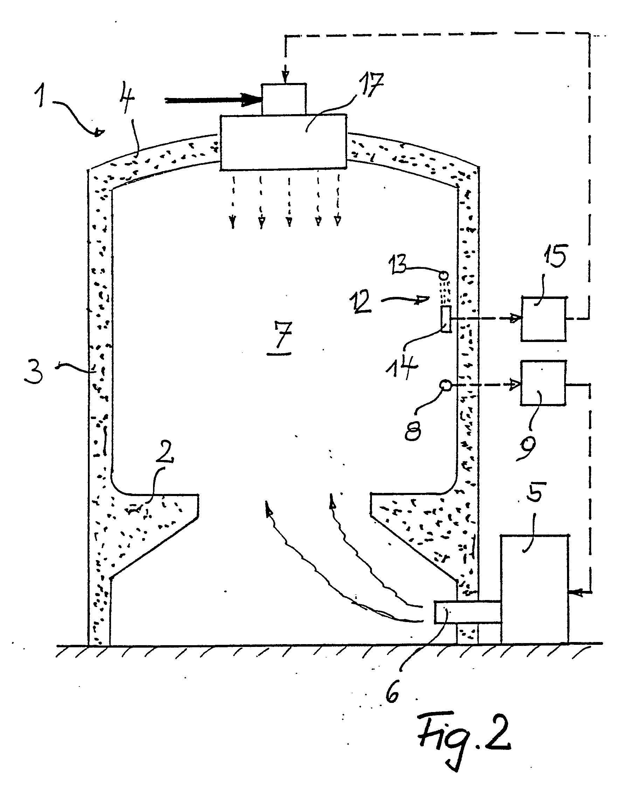

Bei der in Fig. 2 dargestellten Ausführungsform, bei der die Kabine 1 in gleicher Weise aufgebaut ist wie bei der Ausführungsform gemäß Fig. 1, erfolgt die Beheizung wie zuvor beschrieben, über einen Dampfgenerator 5 mit Zuleitung 6 und Thermostatregelung 8, 9.

Bei diesem Ausführungsbeispiel wird jedoch als Kühlmittel Kaltwasser in Aerosolform in den Innenraum 7 eingeführt. Mit dem Begriff "Kaltwasser" im Sinne der vorliegenden Erfindung soll nur klargestellt werden, daß das in den Kabineninnenraum einzubringende Aerosol nicht oder zumindest nur zum Teil durch einen Verdampfungsvorgang erzeugt ist und somit eine entsprechend niedrige Temperaturlage aufweist, um eine Erhöhung der Lufttemperatur im Kabineninnenraum zu vermeiden, zum anderen durch die Zufuhr von Wasser in feinstverteilter Form innerhalb der gegebenen Temperaturlage eine Übersättigung herbeizuführen und somit die gewünschte sichtbare Dampfatmosphäre aufrechtzuerhalten. Die Erzeugung des Aerosols kann beispielsweise durch eine Zerstäubung von Wasser erreicht werden, wobei hier auch die Möglichkeit besteht, auf eine Temperatur von beispielsweise 50 oder 60° C vorgewärmtes Wasser zu zerstäuben.

Die Regelung der Innenraumatmosphäre erfolgt wiederum zum einen über den Dampferzeuger 5 mit seiner Thermostatregelung 8, 9 und zum anderen über das Meßgerät 12 zur Erfassung der Nebeldichte, über das ein Wasser-Aerosol-Erzeuger 17 angesteuert wird . Auch hier wird das als Kühlmittel dienende Aerosol zweckmäßigerweise im zentralen Deckenbereich in die Kabine eingeleitet, so daß das Kühlmittel wie beim Ausführungsbeispiels gemäß Fig. 1 von oben nach unten gegen die von unten nach oben aufsteigende Wärme einströmt. Eine sich während der Einleitungsdauer des Kühlmittels einstellende Zirkulationsströmung ist aufgrund der mittigen Anordnung der Kühlmitteleinleitung so gestaltet, daß sie in genügendem Abstand der Körper der entlang der Kabinenwandung sitzenden Benutzer mit seiner kalten Strömung nach unten verläuft.

In Abwandlung des anhand von Fig. 2 beschriebenen Verfahrens ist auch möglich, entsprechend der Anordnung gem. Fig. 1 das in Form eines Aerosols eingeführte Kaltwasser im Einleitungsbereich mit Dampf zu vermischen, der zumindest als Teilstrom aus dem Dampferzeuger 5 abgezogen wird.

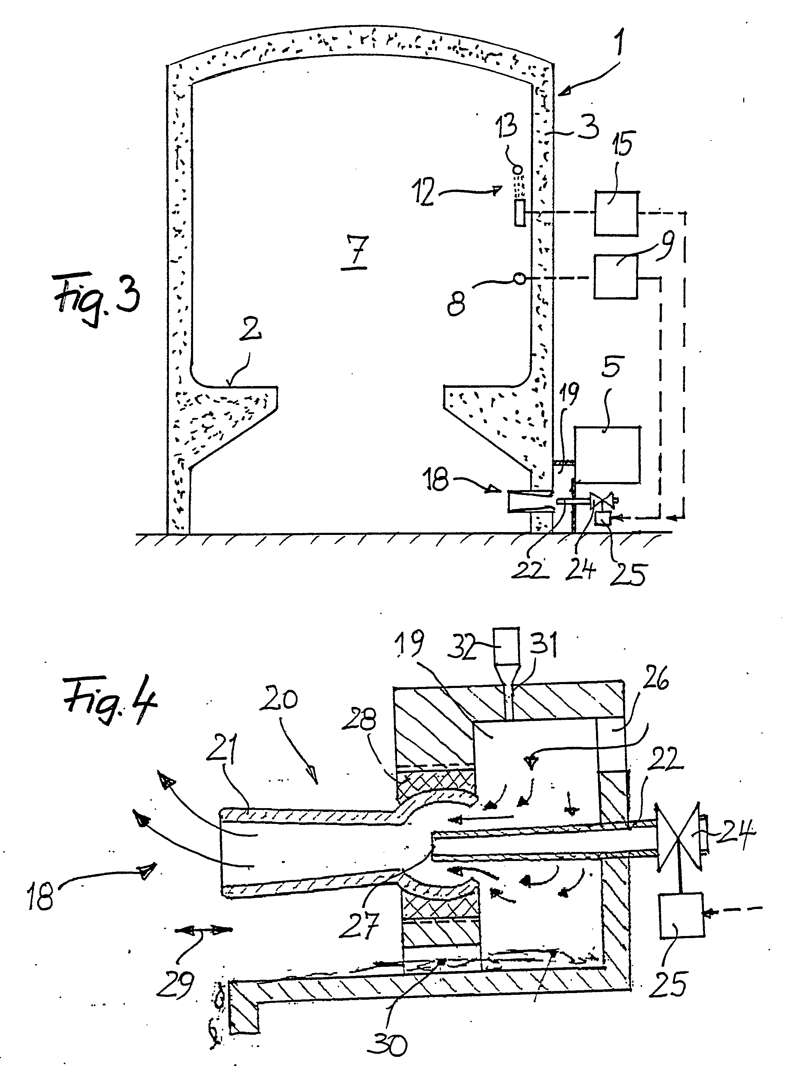

Die in Fig. 3 schematisch im Schnitt dargestellte Dampfbadekabine 1' entspricht in ihrem Grundaufbau der Dampfbadekabine gem. Fig. 1 oder 2. Hierbei sind gleiche Bauteile mit gleichen Bezugszeichen versehen, so daß auf die vorstehende Beschreibung verwiesen werden kann. Die Dampfbadekabine ist mit einer Vorrichtung 18 zur Einleitung des Dampfes in den Kabineninnenraum ausgerüstet, die mit dem Dampfgenerator 5 in Verbindung steht und die in Fig. 4 in größerem Maßstab dargestellt ist und nachstehend in ihrem Aufbau erläutert wird.

Die Vorrichtung 18 besteht im wesentlichen aus einer Dampfverteilkammer 19, die mit einer rohrförmig ausgebildeten Dämpfeinleitungsöffnung 20 versehen ist, die als sich erweiterndes Düsenrohr 21 ausgebildet ist. In den Bereich des engsten Querschnitt des Düsenrohres 21 mündet eine Kaltluftzuleitung 22 ein, die mit ihrem anderen Ende mit der Außenumgebung der Dampfkabine 1 in Verbindung steht. Die Kaltluftzuleitung ist hierbei als kurzes Rohrstück ausgebildet und kann hierbei mit ihrem Ende 23 entweder frei mit dem Umgebungsraum in Verbindung stehen oder aber, wie dargestellt, mit einem Sperrschieber 24 absperrbar sein, der mit einem Stellantrieb 25 versehen ist und der über die Temperaturregeleinrichtung 8, 9 und/oder über die Meßanordnung 12 zur Messung der Nebeldichte verschaltet sein, wie dies in Fig. 3 angedeutet ist.

Die Dampfverteilkammer 19 steht über die Einlaßöffnung 26 mit dem Dampferzeuger 5 in Verbindung. Der aus dem Dampferzeuger 5 mit nur ganz geringem Überdruck von beispielsweise 0,1 bis 0,2 Bar in die Dampfverteilkammer 19 eintretende Dampf strömt koaxial zur Kaltluftzuleitung 22 in das Düsenrohr 21 ein. Je nach der Strömungsgeschwindigkeit im Bereich der Mündung 27 der Kaltluftzuleitung 22 wird von der Dampfströmung durch die Kaltluftzuleitung (bei geöffnetem Sperrschieber 24) Kaltluft angesaugt, die sich im Düsenrohr 21 mit dem Dampf mischt, so daß hier innerhalb des Düsenroh res aufgrund der Abkühlung eine Übersättigung eintritt und der Dampf als sichtbarer Dampfschwaden aus der Mündung des Düsenrohres 21 in den Innenraum 7 eintritt.

Das Düsenrohr 21 ist in der Wandung der Dampfverteilkammer 19 in einem Gewindeblock 28 gelagert, so daß durch Verdrehen des Gewindeblockes 28 um die Gewindeachse das Düsenrohr 21 in Richtung des Pfeiles 29 gegenüber der Mündung 27 der Kaltluftzuleitung 22 axial verschoben werden kann. Je nach der Stellung der Mündung 27 zur engsten Stelle des Düsenrohres 21 kann hierbei die Strömungsgeschwindigkeit des Dampfes im Bereich der Düsenmündung 27 verändert werden, so daß hierüber der angesaugte Mengenstrom der Kaltluft gegenüber dem aufgrund der Druckverhältnisse konstanten Dampfmengenstrom verändert werden kann. Durch eine kugelförmige Ausbildung des im Gewindeblock 28 gehaltenen Endes des Düsenrohres besteht außerdem die Möglichkeit, dieses zu verschwenken, so daß die Einleitung des Dampfstromes in den Kabineninnenraum den örtlichen Gegebenheiten angepaßt werden kann.

Im Bodenbereich der Dampfverteilkammer 19 ist eine Öffnung 30 vorgesehen, über die die Dampfverteilkammer mit dem Kabinen-innenraum in Verbindung steht, so daß das sich in der Dampfverteilkammer bildende Kondensat unmittelbar in den Kabineninnenraum abgeleitet werden kann, so daß die Dampfverteilkammer zugleich eine Kondensatfalle bildet.

Die Dampfverteilkammer ist ferner mit einer Einleitungsöffnung 31 versehen, die mit einer Dosiereinrichtung 32 in Verbindung steht, über die Zusatzstoffe, beispielsweise Duftstoffe, ätherische Öle oder dergl., unmittelbar dem Dampf zugemischt werden können. Die Zumischung der Duftstoffe erfolgt vorteilhaft im Bereich der Dampfzuleitungsöffnung zur Dampfverteilkammer, so daß hier die in der Regel leichtflüchtigen Duftstoffe verdampft werden und sich dann im Bereich des Düsenrohres an den sich bildenden Aerosoltröpfchen anlagern können.

## Ansprüche

1. Verfahren zur Regelung der Raumatmosphäre im Innenraum einer Dampfbadekabine, wobei die Wärmezufuhr zumindest zum Teil durch die Einleitung von Wasserdampf erfolgt und in Abhängigkeit von einer vorgebbaren Innenraumtemperatur geregelt wird, dadurch **gekennzeichnet,** daß zur Ausbildung eines Nebels im Innenraum bei vorgegebener Innenraumtemperatur ein strömungsfähiges Kühlmittel in den Innenraum eingeführt wird.

2. Verfahren nach Anspruch 1, dadurch gekennzeichnet, daß die Regelung der Zufuhr des Kühlmittels in Abhängigkeit von der Nebeldichte erfolgt.

3. Verfahren nach Anspruch 1 oder 2, dadurch gekennzeichnet, daß die Regelung der Zufuhr des Kühlmittels in Abhängigkeit von einer vorgegebenen Lichtdurchlässigkeit der Raumatmosphäre zwischen zwei Meßpunkten erfolgt.

4. Verfahren nach einem der Ansprüche 1 bis 3, dadurch gekennzeichnet, daß als Kühlmittel kalte Luft in den Innenraum eingeleitet wird.

5. Verfahren nach einem der Ansprüche 1 bis 4, dadurch gekennzeichnet, daß das Kühlmittel. vorzugsweise kalte Luft, mit wenigstens einem Teilstrom des zur Beheizung eingeführten Wasserdampfs in den Innenraum eingeleitet wird.

6. Verfahren nach einem der Ansprüche 1 bis 5, dadurch gekennzeichnet, daß als Kühlmittel Wasser in Aerosolform in den Innenraum eingeführt wird.

7. Verfahren nach einem der Ansprüche 1 bis 6, dadurch gekennzeichnet, daß das Kühlmittel, vorzugsweise kalte Luft, in Abhängigkeit von der Strömungsgeschwindigkeit zumindest eines Teilstromes der zur Beheizung einzuführenden Wasserdampfs mit diesem zusammen in den Innenraum eingeleitet wird.

8. Vorrichtung zur Einleitung von Dampf in eine Dampfbadekabine, insbesondere zur Durchführung des Verfahrens nach den Ansprüchen 1 bis 7, mit einem Wasserdampferzeuger, der über wenigstens eine Dampfeinleitungsöffnung mit dem Innenraum der Dampfbadekabine in Verbindung steht, dadurch gekennzeichnet, daß wenigstens eine Dampfeinleitungsöffnung (20) rohrförmig ausgebildet ist und daß die Kaltluftzuleitung (22) im wesentlichen koaxial in die Dampfeinleitungsöffnung (20) einmündet.

9. Vorrichtung nach Anspruch 8, dadurch gekennzeichnet, daß die rohrförmige Dampfeinleitungsöffnung (20) als sich erweiterndes Düsenrohr (21) ausgebildet ist.

10. Vorrichtung nach den Ansprüchen 8 und 9, dadurch gekennzeichnet, daß die Mündung (27) der Kaltluftzuleitung (22) im Bereich des engsten Querschnitts des Düsenrohres (21) angeordnet ist.

11. Vorrichtung nach einem der Ansprüche 8 bis 10, dadurch gekennzeichnet, daß das Düsenrohr (21) und/oder die Mündung (27) der Kaltluftzuleitung (22) in axialer Richtung gegeneinander verstellbar ausgebildet sind.

12. Vorrichtung nach einem der Ansprüche 8 bis 11, dadurch gekennzeichnet, daß dem Düsenrohr (21) eine Dampfverteilkammer (19) vorgeschaltet ist, und daß die Dampfverteilkammer (19) mit einem Kondensatablauf (30) versehen ist.

13. Vorrichtung nach einem der Ansprüche 8 bis 12, dadurch gekennzeichnet, daß im Bereich des Düsenrohres (21), insbesondere im Bereich der Dampfverteilkammer (19) eine Einleitungsöffnung (31) für Zusatzstoffe, insbesondere Duftstoffe, angeordnet ist.

14. Vorrichtung nach einem der Ansprüche 1 bis 13, dadurch gekennzeichnet, daß die Kaltluftzuleitung (22) mit einem Sperrschieber (24) mit Stellantrieb (25) in Verbindung steht, und daß der Stellantrieb (25) mit einer Meßeinrichtung (12) zur Erfassung der "Nebeldichte" und/oder mit einer Temperaturregeleinrichtung (8, 9) ansteuerbar in Verbindung steht.

Fig.1

Fig.2

Fig. 3

Fig. 4